# FASCICULE DE BREVET EUROPEEN

(11) **EP 0 738 688 B1**
(45) Date de publication et mention de la délivrance du brevet: **21.11.2001**
(21) Numéro de dépôt: 96400732.2
(22) Date de dépôt: 04.04.1996
(51) Int. Cl.: C02F 3/12, B01J 19/24, B01J 8/22, B01J 8/00

(54) **Dispositif de traitement biologique de liquide, notamment d'eaux résiduaires**
Vorrichtung zur biologischen Reinigung von Flüssigkeiten, insbesondere von Abwasser
Apparatus for the biological treatment of liquids, specially waste water

(30) Priorité: 21.04.1995 FR 9504833
(43) Date de publication de la demande: 23.10.1996
(73) Titulaire: DEGREMONT, 92508 Rueil-Malmaison Cédex (FR)
(72) Inventeur: Smati, Abdellatif, 92150 Suresne (FR); Lazarova, Valentina, 78230 Le Pecq (FR)
(74) Mandataire: Armengaud Ainé, Alain

(56) Documents cités:
- DE-A- 3 416 193
- DE-A- 4 333 175
- FR-A- 1 079 088
- PATENT ABSTRACTS OF JAPAN vol. 013, no. 236 (C-602), 30 Mai 1989 & JP-A-01 043393 (DENKA CONSULT & ENG CO LTD), 15 Février 1989,
- PATENT ABSTRACTS OF JAPAN vol. 013, no. 461 (C-645), 18 Octobre 1989 & JP-A-01 180297 (DENKA CONSULT & ENG CO LTD), 18 Juillet 1989,
- PATENT ABSTRACTS OF JAPAN vol. 016, no. 315 (C-0961), 10 Juillet 1992 & JP-A-04 090894 (MITSUBISHI KAKOKI KAISHA LTD), 24 Mars 1992,

## Description

La présente invention est relative à un dispositif de traitement de liquide par voie biologique. Elle se réfère plus particulièrement à la mise en oeuvre d'un procédé de mise en mouvement de particules supports de microorganismes dans un liquide devant être traité par ces microorganismes. Cette invention s'applique notamment au traitement biologique des eaux résiduaires.

On connaît (FR-A-2 707 183) un procédé de mise en mouvement de particules supports de microorganismes dans un liquide à traiter par les microorganismes selon lequel on introduit dans un réacteur à deux zones délimitées par une paroi verticale laissant des passages libres en dessous et en dessus de ladite paroi, des particules supports de microorganismes, de densité inférieure à celle du liquide à traiter, on alimente le réacteur en liquide à traiter et on insuffle un gaz à la partie inférieure de l'une des zones du réacteur de manière à établir dans les deux zones une circulation à co-courant, permanente et ordonnée des phases liquide, solide et gazeuse.

Cette même publication décrit une installation de traitement biologique qui comprend au moins deux compartiments communiquant entre eux, chacun de ces compartiments comportant un système d'insufflation individuel et constituant un réacteur à deux zones délimitées par une paroi verticale laissant des passages libres en dessus et en dessous de ladite paroi, l'un au moins de ces compartiments mettant en oeuvre le procédé tel que défini ci-dessus.

L'expérience a montré que lors du fonctionnement d'un tel réacteur il peut se produire un entraînement des particules chargées de biomasse par le liquide traité, ce qui nécessite la présence de systèmes de décantation afin de séparer ces particules entraînées par le liquide traité et des systèmes de recyclage dans le réacteur des particules ainsi récupérées. Ces moyens supplémentaires grèvent le prix de revient de telles installations et ils ne donnent pas toujours satisfaction.

Patent Abstracts of Japan vol. 013, n° 236 (C-602), 30 mai 1989 (J.P.-A-01 043393) décrit un dispositif de traitement biologique de liquides comportant une zone de fluidisation ascendante, une zone de fluidisation descendante, séparées par une plaque immergée et une zone de sédimentation séparées des deux autres zones par une barrière.

La présente invention s'est donc fixée pour objectif de réaliser dans le réacteur un système permettant de séparer du mélange triphasique (phases liquide, solide et gazeuse) les phases les moins denses c'est-à-dire les particules chargées de biomasse et le gaz, sans entraver la circulation des autres phases et en assurant simultanément un recyclage immédiat des particules dans le flux de circulation du mélange triphasique entretenu dans le réacteur.

Partant de l'état de la technique spécifié ci-dessus, la présente invention apporte donc un dispositif de traitement biologique comportant au moins deux compartiments entre lesquels est interposée une paroi verticale de manière que lesdits compartiments communiquent entre eux par des passages libres au-dessus et en dessous de ladite paroi, le liquide à traiter étant introduit dans lesdits compartiments qui contiennent par ailleurs des particules supports de microorganismes présentant une densité inférieure à celle du liquide à traiter et un gaz étant insufflé à la partie inférieure de l'un des compartiments afin d'établir dans les deux compartiments une circulation à co-courant, permanente et ordonnée du mélange multiphasique constitué par la phase liquide, solide et gazeuse, ce dispositf étant caractérisé en ce qu'il est muni, à la partie inférieure du compartiment ne comportant pas l'insufflation du gaz, dans la zone où s'effectue le changement de direction du flux passant d'un compartiment à l'autre et au-dessus de la reprise de l'eau traitée, d'un système de séparation des phases les moins denses (particules, gaz) dudit mélange multiphasique, comprenant au moins deux rangées d'obstacles disposés en quinconce en travers de l'écoulement multiphasique et qui constitue des chicanes.

Selon un mode de réalisation préféré de ce dispositif lesdits obstacles formant chicanes sont constitués par des surfaces inclinées par rapport à la direction principale de l'écoulement multiphasique, l'angle d'inclinaison étant réglé en fonction des caractéristiques hydrodynamiques de l'écoulement, des propriétés physiques des phases et de la configuration géométrique du dispositif. De préférence, cet angle par rapport à l'horizontale est de l'ordre de 20 à 40°, notamment 30° environ.

Selon l'invention lesdits obstacles disposés en quinconce et formant chicanes présentent une configuration plane. Ils peuvent être inclinés transversalement à la direction principale de l'écoulement multiphasique.

Selon des variantes du dispositif objet de l'invention, lesdits obstacles disposés en quinconce et formant chicanes peuvent présenter des configurations courbe ou prismatique. Ils sont de préférence montés sur des supports de fixation permettant leur réglage en hauteur.

D'autres caractéristiques et avantages de la présente invention ressortiront de la description faite ci-après en référence aux dessins annexés qui en illustrent divers exemples de réalisation dépourvus de tout caractère limitatif. Sur les dessins :
La figure 1 est une vue schématique représentant en coupe verticale un réacteur perfectionné selon la présente invention;
La figure 2 est également une vue schématique en perspective illustrant un exemple de réalisation du réacteur selon l'invention;
La figure 3 est une vue partielle à plus grande échelle illustrant les moyens prévus par l'invention pour assurer la séparation des phases les moins denses (particules, gaz) du mélange triphasique;
La figure 4 est un schéma en perspective illustrant le fonctionnement du perfectionnement objet de l'invention et
Les figures 5 à 8 sont des vues schématiques représentant divers exemples de réalisation des obstacles disposés en quinconce et formant chicanes prévus par l'invention pour séparer les phases les moins denses du mélange triphasique.

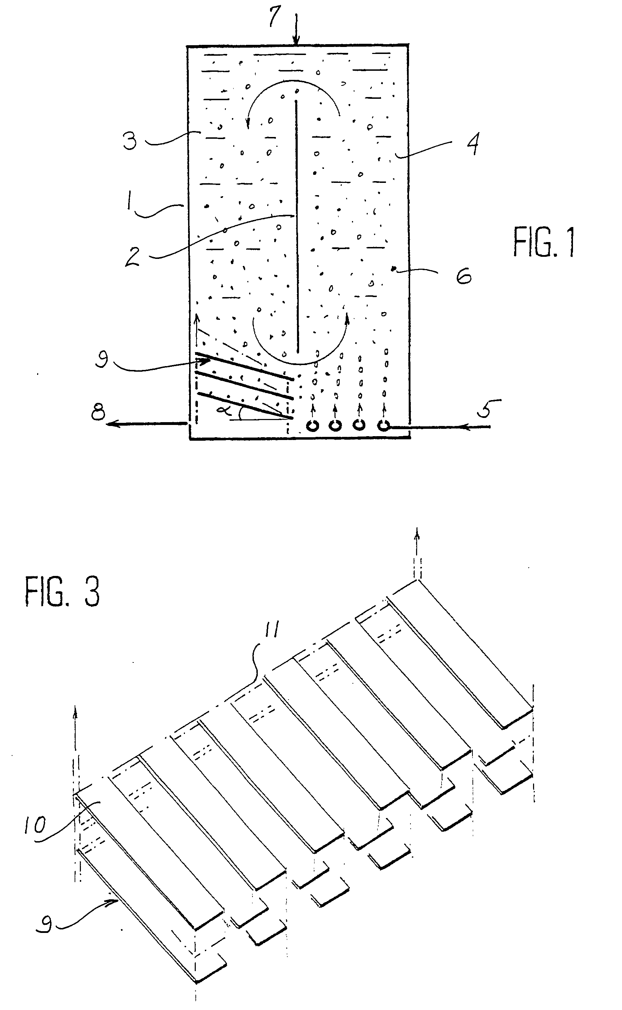

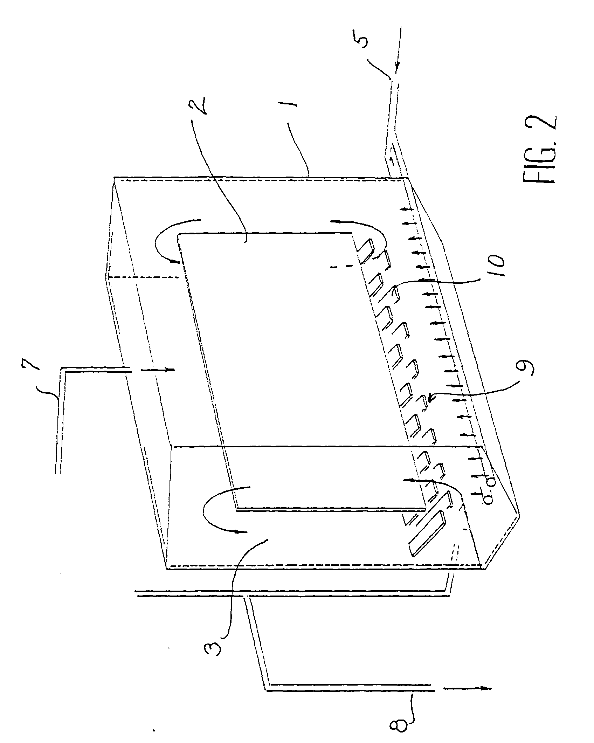

En se référant aux dessins et notamment aux figures 1 à 3 on voit que le réacteur 1 selon la présente invention est du type décrit dans la publication mentionnée ci-dessus. Il comporte donc une paroi verticale 2 qui délimite deux zones 3 et 4 communiquant entre-elles par des passages au-dessus et en dessous de cette paroi 2. Un système d'insufflation de gaz 5 (par exemple de l'air) est positionné à la partie inférieure de l'une des zones, ici la zone 4. Le réacteur 1 comprend des particules granulaires 6 dont la densité est inférieure à celle du liquide à traiter. Les microorganismes nécessaires aux transformations biochimiques, par exemple pour l'épuration des eaux résiduaires, sont fixés et se développent sur les particules supports 6. Le liquide à traiter est introduit à l'aide d'une conduite 7 à la partie supérieure du réacteur 1, dans cet exemple de réalisation non limitatif. Sous l'effet de la force motrice résultant des bulles d'air introduites par la conduite 5 les trois phases solide, liquide et gazeuse se mettent en circulation permanente et ordonnée selon les flèches indiquées sur les figures 1 et 2. Le liquide traité est évacué à l'aide d'une canalisation 8 prévue à la base du compartiment 3.

Afin d'éviter un entraînement des particules supports chargées en biomasse avec le liquide traité évacué par la canalisation 8, l'invention prévoit un système de séparation des phases les moins denses (particules, gaz) qui est positionné à la partie inférieure du compartiment ne comportant pas les moyens d'insufflation de gaz 5, au-dessus de la reprise 8 de l'eau traitée, dans la zone de ce compartiment où s'effectue le changement de direction du flux passant d'un compartiment à l'autre.

Dans l'exemple de réalisation illustré par les figures 1 et 2 ce système de séparation est positionné à la partie inférieure du compartiment 3 du réacteur 1. Il comporte au moins deux rangées d'obstacles, désignées dans leur ensemble par la référence 9, ces obstacles étant disposés en quinconce en travers de l'écoulement multiphasique, de façon à constituer des chicanes. Cette disposition apparaît clairement de l'examen des figures 2,3 et 4. Grâce à cette disposition on réalise au-dessus de la reprise 8 de l'eau traitée, une zone d'eau qui est exempte de particules légères telles que 6.

Dans l'exemple de réalisation préféré, illustré par les figures 1 à 5, les obstacles formant chicanes sont réalisés sous la forme de surfaces planes telles que 10 qui sont inclinées par rapport à la direction principale de l'écoulement multiphasique dans le réacteur 1. L'angle d'inclinaison α de chaque surface plane 10 par rapport à l'horizontale peut être réglé en fonction des caractéristiques hydrodynamiques de l'écoulement du mélange multiphasique, des propriétés physiques des phases et de la configuration géométrique du dispositif. A titre d'exemple non limitatif on précise que cet angle d'inclinaison peut être compris entre environ 20 et 40°, de préférence 30°.

En se référant à la figure 3 on voit que les surfaces inclinées 10 disposées en quinconce et formant chicanes sont montées sur des supports horizontaux 11, par exemple par l'intermédiaire d'articulations formant charnières de tout type connu, ces supports pouvant être réglés en hauteur comme l'indiquent les flèches verticales représentées sur cette figure 3. Il est ainsi possible de régler la valeur de l'angle α et de plaquer tout l'ensemble des rangées d'obstacles disposés en quinconce 9, contre la paroi du réacteur lorsque ce dernier est en phase nettoyage, vidé de l'effluent liquide à traiter et rempli uniquement des particules. Grâce à cette disposition les obstacles disposés en quinconce ne subissent pas la charge résultant du poids des particules accumulées dans le réacteur. De l'autre côté des supports horizontaux 11, l'ensemble des obstacles formant chicanes 9 est maintenu par tout système classique.

Selon l'invention et comme on le voit clairement sur la figure 1 le système d'obstacles formant chicanes 9 monté sur les supports tels que 11 est décollé de la paroi du réacteur 1 afin de permettre la circulation des bulles de gaz à cet endroit du réacteur 1.

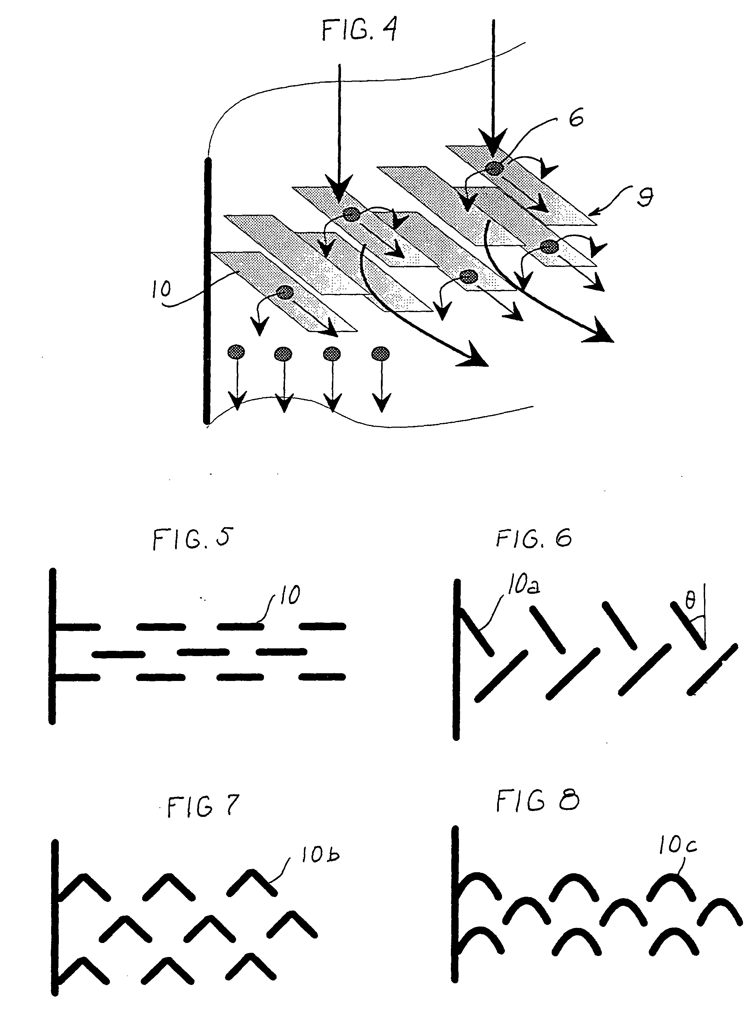

La figure 4 illustre clairement le fonctionnement du dispositif objet de l'invention. On voit que la présence des obstacles 10 formant chicanes assurent la séparation des particules telles que 6 qui glissent sur lesdits obstacles et qui sont ainsi ramenées dans le flux multiphasique (voir la figure 1) dans la zone où s'effectue le changement de direction du flux passant du compartiment 3 au compartiment 6 lors de la circulation permanente de ce flux. Grâce à cette disposition on évite tout entraînement des particules 6 chargées de biomasse par le liquide traité évacué par la conduite 8.

II est bien entendu possible de réaliser les obstacles 9 formant chicanes et disposés en quinconce selon toutes autres formes que celle illustrée par les figures 1 à 5. les figures 6 à 8 illustrent diverses formes possibles :
sur la figure 6 on met en oeuvre des surfaces planes 10a qui sont inclinées transversalement selon un angle θ par rapport à la direction principale de l'écoulement multiphasique;
sur la figure 7 les obstacles formant chicanes 10b ont une configuration prismatique et sur la figure 8 les obtacles formant chicanes 10c ont une configuration courbe.

Naturellement il ne s'agit là que d'exemples possibles qui ne présentent aucun caractère limitatif.

Il résulte de la lecture de la description qui précède que le dispositif objet de l'invention permet effectivement de réaliser une séparation des phases les moins denses, à masse volumique la moins élevée, du mélange multiphasique, cette séparation permettant notamment d'éviter un entraînement par le liquide traité, des particules chargées de biomasse. On notera que cette séparation s'effectue sans entraver la circulation des autres phases et sans dissipation significative de l'énergie cinétique des phases en circulation. Par ailleurs le dispositif objet de l'invention permet d'améliorer l'écoulement du mélange multiphasique dans les endroits où s'effectue le changement de la direction des flux, sous la paroi de séparation 2 du réacteur 1.

## Revendications

1. Dispositif de traitement biologique de liquides, notamment d'eaux résiduaires comportant au moins deux compartiments (3,4) entre lesquels est interposée une paroi verticale (2) de manière que lesdits compartiments communiquent entre eux par des passages libres au-dessus et en dessous de ladite paroi, le liquide à traiter étant introduit dans lesdits compartiments qui contiennent par ailleurs des particules (6) supports de microorganismes présentant une densité inférieure à celle du liquide à traiter et un gaz étant insufflé à la partie inférieure de l'un des compartiments afin d'établir dans les deux compartiments une circulation à co-courant, permanente et ordonnée du mélange multiphasique constitué par la phase liquide, solide et gazeuse, ce dispositf étant **caractérisé en ce qu'**il est muni, à la partie inférieure du compartiment (3) ne comportant pas l'insufflation du gaz, au-dessus de la reprise (8) du liquide traité, dans la zone où s'effectue le changement de direction du flux passant d'un compartiment à l'autre, d'un système de séparation (9) des phases les moins denses (particules, gaz) dudit mélange multiphasique, comprenant au moins deux rangées d'obstacles disposés en quinconce en travers de l'écoulement multiphasique et qui constitue des chicanes.

2. Dispositif selon la revendication 1, **caractérisé en ce que** lesdits obstacles formant chicanes (9) sont constitués par des surfaces (10) inclinées par rapport à la direction principale de l'écoulement multiphasique, l'angle d'inclinaison (α) étant réglé en fonction des caractéristiques hydrodynamiques de l'écoulement, des propriétés physiques des phases et de la configuration géométrique du dispositif.

3. Dispositif selon la revendication 2, **caractérisé en ce que** ledit angle d'inclinaison (α) par rapport à l'horizontale, est de l'ordre de 20 à 40°, notamment de 30° environ.

4. Dispositif selon l'une quelconque des revendications précédentes **caractérisé en ce que** lesdits obstacles disposés en quinconce (10) et formant des chicanes présentent une configuration plane.

5. Dispositif selon la revendication 4, **caractérisé en ce que** lesdites chicanes de configuration planes sont inclinées (θ) transversalement à la direction principale de l'écoulement multiphasique.

6. Dispositif selon l'une quelconque des revendications 1-3 **caractérisé en ce que** lesdits obstacles disposés en quinconce et formant des chicanes (10c) ont une configuration courbe.

7. Dispositif selon l'une quelconque des revendications 1-3, **caractérisé en ce que** lesdits obstacles disposés en quinconce et formant des chicanes (10b) ont une configuration prismatique.

8. Dispositif selon l'une quelconque des revendications précédentes **caractérisé en ce que** lesdits obstacles formant chicanes sont montés sur des supports de fixation réglables en hauteur (11).

9. Dispositif selon l'une quelconque des revendications précédentes **caractérisé en ce que** le système d'obstacles formant chicanes (9) est décollé de la paroi du réacteur (1) afin de permettre la circulation des bulles de gaz à cet endroit du réacteur (1).

## Patentansprüche

1. Vorrichtung zur biologischen Behandlung von Flüssigkeiten, insbesondere Abwasser, welche mindestens zwei Abteile (3, 4) umfaßt, zwischen denen eine senkrechte Wand (2) derart eingebaut ist, daß sie untereinander über freie Durchlässe oberhalb und unterhalb der Wand in Verbindung stehen, wobei die zu behandelnde Flüssigkeit in diese Abteile eingeleitet wird, die außerdem Trägerteilchen (6) für Mikroorganismen, deren Dichte niedriger als die der zu behandelnden Flüssigkeit ist, und ein Gas enthalten, das im unteren Teil eines der Abteile eingeblasen wird, um in den beiden Abteilen eine erzwungene, ständige Gleichstromzirkulation des Mehrphasengemischs zu erzeugen, das aus der Flüssig-, Fest- und Gasphase besteht, und die Vorrichtung **dadurch gekennzeichnet ist, daß** sie im unteren Teil des Abteils (3), das keine Gaseinleitung enthält, über dem Abfluß (8) der behandelten Flüssigkeit in der Zone, in welcher sich der Richtungswechsel der Strömung vollzieht, die von einem Abteil in das andere übergeht, mit einem System (9) für die Trennung der am wenigsten dichten Phasen (Teilchen, Gas) des Mehrphasengemischs ausgerüstet ist, welches mindestens zwei Reihen von Hindernissen umfaßt, die quer zur Mehrphasenströmung versetzt angeordnet sind und Trennbleche bilden.

2. Vorrichtung nach Anspruch 1, **dadurch gekennzeichnet, daß** die Trennbleche bildenden Hindernisse (9) aus Flächen (10) bestehen, die zur Hauptrichtung der Mehrphasenströmung geneigt sind, wobei der Neigungswinkel (α) in Abhängigkeit von den hydrodynamischen Parametern der Strömung, den physikalischen Eigenschaften der Phasen und der geometrischen Gestaltung der Vorrichtung eingestellt wird.

3. Vorrichtung nach Anspruch 2, **dadurch gekennzeichnet, daß** der Neigungswinkel (α) etwa 20 bis 40° und insbesondere etwa 30° zur Horizontalen beträgt.

4. Vorrichtung nach einem der vorhergehenden Ansprüche, **dadurch gekennzeichnet, daß** die Hindernisse gegeneinander versetzt angeordnet sind und Trennbleche (10) bilden, die eine flache Form aufweisen.

5. Vorrichtung nach Anspruch 4, **dadurch gekennzeichnet, daß** die Trennbleche mit flacher Form quer zur Hauptrichtung der Mehrphasenströmung geneigt (θ) sind.

6. Vorrichtung nach einem der Ansprüche 1 bis 3, **dadurch gekennzeichnet, daß** die Hindernisse, welche gegeneinander versetzt angeordnet sind und Trennbleche (10c) bilden, eine gekrümmte Form haben.

7. Vorrichtung nach einem der Ansprüche 1 bis 3, **dadurch gekennzeichnet, daß** die Hindernisse, welche gegeneinander versetzt angeordnet sind und Trennbleche (10b) bilden, eine Prismenform haben.

8. Vorrichtung nach einem der vorhergehenden Ansprüche, **dadurch gekennzeichnet, daß** die Trennbleche bildenden Hindernisse auf höhenverstellbaren Halterungen (11) angebracht sind.

9. Vorrichtung nach einem der vorhergehenden Ansprüche, **dadurch gekennzeichnet, daß** das Trennbleche bildende Hindernissystem (9) von der Wand des Reaktors (1) entfernt ist, um an dieser Stelle des Reaktors (1) die Zirkulation von Gasbläschen zu ermöglichen.

## Claims

1. Apparatus for the biological treatment of liquids, particularly waste water, having at least two compartments (3, 4) between which is interposed a vertical wall (2), so that said compartments communicate with one another by free passages above and below said wall, the liquid to be treated being introduced into said compartments, which also contain microorganism support particles (6) having a density lower than that of the liquid to be treated and a gas is blown into the lower part of one of the compartments so as to establish in both compartments a permanent, ordered, co-current circulation of the multiphase mixture constituted by the liquid, solid and gaseous phases, said apparatus being **characterized in that** it is provided, in the lower part of the compartment (3) having no blowing in of gas, above the treated liquid return (8), in the area where the direction change takes place to the flow passing from one compartment to the other, a system (9) for separating the less dense phases (particles, gas) of said multiphase mixture, comprising at least two rows of obstacles arranged in staggered manner arranged across the multiphase flow and which constitute baffles.

2. Apparatus according to claim 1, **characterized in that** said obstacles forming baffles (9) are constituted by surfaces (10) inclined with respect to the main multiphase flow direction, the inclination angle (α) being regulated as a function of the hydrodynamic characteristics of the flow, the physical properties of the phases and the geometrical configuration of the apparatus.

3. Apparatus according to claim 2, **characterized in that** said inclination angle (α) with respect to the horizontal is approximately 20 to 40°, particularly approximately 30°.

4. Apparatus according to any one of the preceding claims, **characterized in that** said obstacles (10) arranged in staggered manner and forming baffles have a planar configuration.

5. Apparatus according to claim 4, **characterized in that** said baffles with a planar configuration are inclined (θ) transversely to the main multiphase flow direction.

6. Apparatus according to any one of the claims 1 to 3, **characterized in that** said obstacles arranged in staggered manner and forming baffles (10c) have a curved configuration.

7. Apparatus according to any one of the claims 1 to 3, **characterized in that** said obstacles arranged in staggered manner and forming baffles (10b) have a prismatic configuration.

8. Apparatus according to any one of the preceding claims, **characterized in that** said obstacles forming baffles are mounted on height-regulatable fixing supports (11).

9. Apparatus according to any one of the preceding claims, **characterized in that** the system of obstacles forming baffles (9) is separated from the wall of the reactor (1) in order to permit the circulation of gas bubbles at this point of the reactor (1).
